# EUROPEAN PATENT APPLICATION

(11) **EP 4 297 251 A1**
(43) Date of publication of application: **27.12.2023**
(21) Application number: 22180221.8
(22) Date of filing: 21.06.2022
(51) Int. Cl.: H02K 5/20, H02K 7/116, H02K 11/33

(54) **ELECTRIC DRIVE UNIT WITH IMPROVED COOLING CONCEPT**

(71) Applicant: Valeo eAutomotive Germany GmbH, 91056 Erlangen (DE)
(72) Inventor: Lewandowski, Marek, 91056 C/o VSeA, Erlangen (DE)
(74) Representative: Valeo Powertrain Systems

(57) **Abstract**

An electric drive unit (1, 1a..1e) is disclosed, which comprises a housing (2a..2e), an electric motor (3) and a coupled gear unit (4) in the housing (2a..2e), an electric power converter (5, 5a..5f) for the electric motor (3) on or in the housing (2a..2e) and a drive unit oil channel (6) in the housing (2a..2e) at least in the region of the electric motor (3) for cooling the same. Moreover, the electric drive unit (1, 1a..1e) comprises a water oil plate heat exchanger (7, 7a..7g), which a) is mounted on or integrated in the housing (2a..2e) of the electric drive unit (1, 1a..1e) or b) is mounted on the electric power converter (5, 5a..5f). In addition, the invention relates to a vehicle (30) with such an electric drive unit (1, 1a..1e).

## Description

### TECHNICAL FIELD

The invention relates to an electric drive unit, which comprises a housing, an electric motor arranged in the housing, a gear unit, an electric power converter and a drive unit oil channel. The gear unit is arranged in the housing and mechanically coupled to the electric motor. The electric power converter is arranged on or in the housing and is electrically connected to the electric motor. Finally, the drive unit oil channel is arranged in the housing at least in the region of the electric motor for cooling the same. Moreover, the invention relates to a vehicle with an electric drive unit of the above kind, which is provided to propel the vehicle at least partially or intermittently.

### BACKGROUND ART

An electric drive unit and a vehicle of the aforementioned kinds are generally known. During operation, the electric drive unit generates waste heat, mainly in its electric motor and in its electric power converter, which is used to alternatingly power the windings from the electric motor for generation of a rotating electromagnetic field. Because natural heat dissipation is not sufficient to keep the electric drive unit and the electric power converter sufficiently cool in some applications like in an electric vehicle, the electric motor can be oil cooled and the electric power converter can be water cooled. The gear unit usually does not generate much waste heat and can be passively cooled. However, the gear unit can also be oil cooled for example. Provision of different cooling circuits is technically complicated, in particular when just limited space is available like it is the case in electric cars. Manufacturing and later on maintenance can become a challenging task if the electric drive unit is not designed properly. Moreover, known electric drive units are not very robust against unfavorable conditions like vibrations in an electric vehicle, and the cooling circuits can get damaged easily.

### DISCLOSURE OF INVENTION

Accordingly, an object of the invention is to provide an improved electric drive unit and an improved electric vehicle. In particular, a solution shall be proposed, which is less complicated and ensures easy manufacturing and maintenance of the electric drive unit and reduces design effort. Moreover, robustness of an electric drive unit shall be increased.

The object of the invention is solved by an electric drive unit ("e-axle") as disclosed in the opening paragraph, which additionally comprises a water oil plate heat exchanger with a heat exchanger water inlet, a heat exchanger water outlet, a heat exchanger water channel between the heat exchanger water inlet and the heat exchanger water outlet, a heat exchanger oil inlet, a heat exchanger oil outlet and a heat exchanger oil channel between the heat exchanger oil inlet and the heat exchanger oil outlet, wherein the water oil plate heat exchanger
a) is mounted on or integrated in the housing of the electric drive unit or
b) is mounted on the electric power converter.

Moreover, the object of the invention is solved by a vehicle with an electric drive unit of the above kind, which is provided to propel the vehicle at least partially or intermittently.

By the proposed measures, technical complexity of an electric drive unit can be reduced. That is why the electric drive unit can be designed, manufactured and maintained easier compared to known solutions. Moreover, the electric drive unit is more robust against unfavorable conditions like vibrations in an electric vehicle because of the special arrangement of the water oil plate heat exchanger. For example, the electric motor can be oil cooled, the electric power converter can be water cooled and the gear unit can be passively cooled.

In particular the water oil plate heat exchanger

in case a) can directly be mounted on or integrated in the housing of the electric drive unit or
in case b) can directly be mounted on the electric power converter.

By these measures, the above advantages stand out even more.

"Directly mounted" in the above context in particular means "without the use of additional parts, except of optional sealings in-between". In other words, in case a) there is body contact between the water oil plate heat exchanger and the housing of the electric drive unit, as the case may be with an optional sealing in-between. Accordingly, in case b), there is body contact between the water oil plate heat exchanger and the electric power converter, as the case may be with an optional sealing in-between. Additionally, the electric power converter can directly be mounted on or integrated in the housing of the electric drive unit. Accordingly, in case b), there may be body contact between the electric power converter and the housing of the electric drive unit, as the case may be with an optional sealing in-between.

It should be noted that in case b), the water oil plate heat exchanger is not only provided for heat exchange between oil and water, but also for cooling the electric power converter.

Further advantageous embodiments are disclosed in the claims and in the description as well as in the figures.

Beneficially, the drive unit oil channel
in case a) can directly be connected to the heat exchanger oil channel via the heat exchanger oil inlet or heat exchanger oil outlet or
in case b) can directly be connected to a converter oil channel in the electric power converter, wherein the converter oil channel is directly connected to the heat exchanger oil channel via the heat exchanger oil inlet or oil heat exchanger outlet. By these measures, the presented advantages stand out even more. "Directly connected" in the above context in particular means "without the use of additional tubes". Instead, the connection between the drive unit oil channel and the heat exchanger oil channel in case a) is provided body contact of the housing of the electric drive unit and the water oil plate heat exchanger, as the case may be with an optional sealing in-between. Accordingly, in case b), the connections between the drive unit oil channel and the converter oil channel and the converter oil channel and the heat exchanger oil channel are provided body contact of the respective parts, too, again with optional sealings in-between as the case may be. The converter oil channel for example may be embodied as a simple hole in the electric power converter, which connects the drive unit oil channel and the heat exchanger oil channel.

Beneficially, a drive unit water channel is provided, which is arranged in the housing of the electric drive unit adjacent to the power converter for cooling the same, wherein the drive unit water channel
in case a) can directly be connected to the heat exchanger water channel via the heat exchanger water inlet or heat exchanger water outlet or
in case b) can directly be connected to a converter water channel in the electric power converter, wherein the converter water channel is directly connected to the heat exchanger water channel via the heat exchanger water inlet or heat exchanger water outlet.

By these measures, the presented advantages stand out even more. In line with the aforementioned definition, "directly connected" in the above context in particular again means "without the use of additional tubes". Instead, the connection between the drive unit water channel and the heat exchanger water channel in case a) is provided by body contact of the housing of the electric drive unit and the water oil plate heat exchanger, as the case may be with an optional sealing in-between. Accordingly, in case b), the connections between the drive unit water channel and the converter water channel and between the converter water channel and the heat exchanger water channel are provided by body contact of the respective parts, too, again with optional sealings in-between as the case may be. The converter water channel for example may be embodied as a simple hole in the electric power converter, which connects the drive unit water channel and the heat exchanger water channel. Alternatively, it may also comprise cooling fins or cooling pins and may be provided for cooling the electric power converter.

In one embodiment, the water oil plate heat exchanger comprises a plate stack of a plurality of heat exchanger plates, which alternatingly and pairwise form sections of the heat exchanger water channel and sections of the heat exchanger oil channel in-between. In particular, the heat exchanger plates have the same height measured in a stacking direction. Hence, the cooling power of the water oil plate heat exchanger can be adapted to demands easily.

Beneficially, the water oil plate heat exchanger comprises a base body with the heat exchanger water inlet, the heat exchanger water outlet, the heat exchanger oil inlet and the heat exchanger oil outlet, wherein the base body
- is mounted to the plate stack of heat exchanger plates,
- is plate-like and
- is thicker than each of the heat exchanger plates.

Heat exchanger plates are comparably thin usually. Hence, a base body on the one hand can improve mechanical stability of the water oil plate heat exchanger and on the other hand can provide inlets and outlets.

Beneficially, the base body
in case a) can directly be mounted on or integrated in the housing of the electric drive unit or
in case b) can directly be directly mounted on the electric power converter.

In this way, technical complexity of the electric drive unit can further be reduced. "Directly mounted" in the above context in particular means "without the use of additional parts, except of optional sealings in-between". In other words, in case a) there is body contact between the base body and the housing of the electric drive unit, as the case may be with an optional sealing in-between. Accordingly, in case b), there is body contact between the base body and the electric power converter, as the case may be with an optional sealing in-between.

In a very advantageous embodiment, the plate-like base body has a height measured in a stacking direction of < 3mm. In this way, the plate-like base body gives enough mechanical stability to the plate stack in the unmounted state of the water oil plate heat exchanger, but it does not much increase weight of the same because in the mounted state mechanical stability is provided by the housing of the electric drive unit anyway. So, the total weight of the electric drive unit can be reduced compared to prior art solutions.

In yet another very advantageous embodiment, the base body in case b) is multipart and comprises a connector body with the heat exchanger water inlet, the heat exchanger water outlet, the heat exchanger oil inlet and the heat exchanger oil outlet and comprises a cooling plate, which at least electronic power switches of the electric power converter are mounted on and which closes the heat exchanger water channel. In this way, the base body provides a double function. On the one hand, it improves mechanical stability of the water oil plate heat exchanger and provides inlets and outlets, on the other hand, it cools the electric power converter at the same time.

In an advantageous embodiment, the plate stack of heat exchanger plates
in case a) can directly be mounted on or integrated in the housing of the electric drive unit or
in case b) can directly be mounted on the electric power converter.

In this way, a base body can be omitted and technical complexity of the electric drive unit can be reduced even further. Functions and features, which are usually embodied in the base body, are embodied in the housing of the electric drive unit in this variant. In particular, the housing of the electric drive unit gives mechanical stability to the plate stack. "Directly mounted" in the above context in particular means "without the use of additional parts, except of optional sealings in-between". In other words, in case a) there is body contact between the plate stack and the housing of the electric drive unit, as the case may be with an optional sealing in-between. Accordingly, in case b), there is body contact between the plate stack and the electric power converter, as the case may be with an optional sealing in-between.

In a preferred embodiment of the electric drive unit, the water oil plate heat exchanger
in case a) is bolted, welded or glued to the housing of the electric drive unit or
in case b) is bolted, welded or glued to the electric power converter.

In this way, the water oil plate heat exchanger can be mounted to the housing of the electric drive unit or to the electric power converter easily.

### BRIEF DESCRIPTION OF DRAWINGS

The invention now is described in more detail hereinafter with reference to particular embodiments, which the invention however is not limited to.
- Fig. 1: shows a sectional view of a first example of an electric drive unit with the water oil plate heat exchanger and the electric power converter mounted at different positions;
- Fig. 2: shows a detailed sectional view of an exemplary electric power converter;
- Fig. 3: shows a detailed sectional view of an exemplary water oil plate heat exchanger;
- Fig. 4: shows a detailed sectional view of an exemplary converter heat exchanger arrangement, which combines the features disclosed in Figs. 2 and 3;
- Fig. 5: shows a sectional view of a first example of an electric drive unit with a converter heat exchanger arrangement;
- Fig. 6: like Fig. 5, but with a direct connection of the drive unit oil channel and the converter heat exchanger arrangement;
- Fig. 7: shows a sectional view of an electric drive unit with an additional drive unit water channel for cooling the electric power converter;
- Fig. 8: shows a sectional view of an electric drive unit where the plate stack of the water oil plate heat exchanger is directly mounted to the housing of the electric drive unit and
- Fig. 9: shows a schematic view of an electric vehicle.

### DETAILED DESCRIPTION

Generally, same parts or similar parts are denoted with the same/similar names and reference signs hereinafter. The features disclosed in the description apply to parts with the same/similar names respectively reference signs. Indicating the orientation and relative position is related to the associated figure.

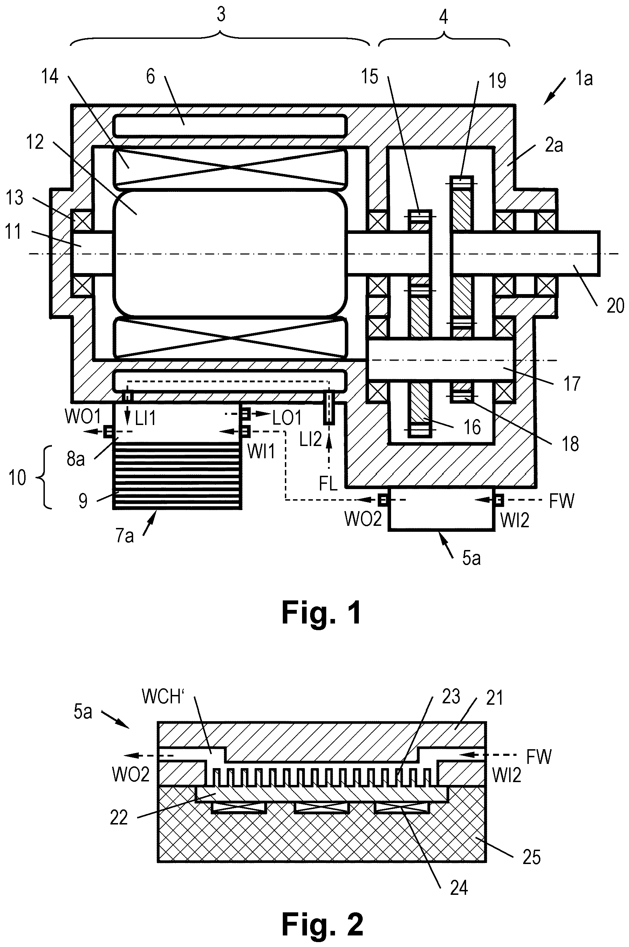

Fig. 1 shows a sectional view of a first example of an electric drive unit ("e-axle") 1a, which comprises a housing 2a, an electric motor 3 arranged in the housing 2a and a gear unit 4, which is arranged in the housing 2a as well and which is mechanically coupled to the electric motor 3. In addition, the electric drive unit 1a comprises an electric power converter 5a, which is arranged on the housing 2a and which is electrically connected to the electric motor 3. Generally, the electric power converter 5a is used to alternatingly power the windings from the electric motor 3 for generation of a rotating electromagnetic field. Moreover, the electric drive unit 1a comprises a drive unit oil channel 6 arranged in the housing 2a at least in the region of the electric motor 3 for cooling the same, and a water oil plate heat exchanger 7a with a base body 8a and a plurality of heat exchanger plates 9, which form a plate stack 10. In this example, the water oil plate heat exchanger 7a is mounted on the housing 2a of the electric drive unit 1a.

The electric motor 3 comprises a rotor shaft 11 with a rotor 12 mounted thereon, bearings 13 and a stator 14. The rotor 12 is supported by means of bearings 13 and arranged within the stator 14 of the electric motor 3.

The gear unit 4 comprises a pinion 15 mounted on the rotor shaft 11, a gear wheel 16, an intermediate shaft 17, another pinion 18, another gear wheel 19 and an output shaft 20. The pinion 15 is mounted on the rotor shaft 11, whereas the pinion 18 and the gear wheel 16 are mounted to the intermediate shaft 17. The gear wheel 19 finally is mounted to the output shaft 20. The pinion 15 engages with the gear wheel 16, and the pinion 18 engages with the gear wheel 19. Torque and a rotational movement generated by the electric motor 3 is fed into the gear unit 4, which converts said torque and a rotational movement into a higher torque and slower rotational movement at its output shaft 20.

It should be noted that Fig. 1 just exemplarily shows an electric drive unit 1a, and a drive unit may look differently. For example, an electric drive unit may comprise a planetary gear.

The water oil plate heat exchanger 7a in its base plate 8a comprise a heat exchanger water inlet WI1, a heat exchanger water outlet WO1, a heat exchanger oil inlet LI1 and a heat exchanger oil outlet LO1. The electric power converter 5a comprises a converter water inlet WI2 and a converter water outlet WO2.

During operation, the electric drive unit 1a generates waste heat, mainly in its electric motor 3 and in its electric power converter 5a. Because natural heat dissipation is not sufficient to keep the electric drive unit 1a cool, heat is drawn away by a water flow FW and an oil flow FL. Usually, the electric motor 3 is oil cooled, the electric power converter 5a is water cooled and the gear unit 4 is passively cooled like this is depicted in Fig. 1.

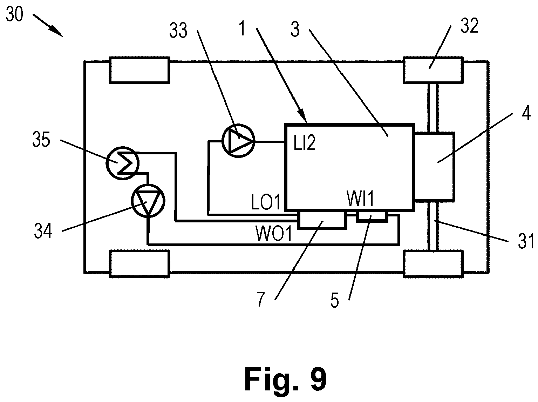

Concretely, the water flow FW passes the electric power converter 5a and then the water oil plate heat exchanger 7a. In detail, it enters the electric power converter 5a through its water inlet WI2 and leaves the same through its water outlet WO2. Then, it enters the water oil plate heat exchanger 7a through its heat exchanger water inlet WI1 and leaves the same through its heat exchanger water outlet WO1. For example, the water outlet WO2 of the electric power converter 5a can be connected to the water inlet WI1 of the water oil plate heat exchanger 7a by means of a tube. Further on, the water flow FL may be part of a water based cooling circuit (see Fig. 9 in this context). In Fig. 1 the water flow FW first passes the electric power converter 5a and then the water oil plate heat exchanger 7a. However, it may also go through the water oil plate heat exchanger 7a first and then pass the electric power converter 5a.

The oil flow FL first passes the drive unit oil channel 6 and then the water oil plate heat exchanger 7a. In detail, it enters the drive unit oil channel 6 through its oil inlet LI2. After leaving the drive unit oil channel 6, it enters the water oil plate heat exchanger 7a through its heat exchanger oil inlet LI1 and leaves the same through its heat exchanger oil outlet LO1. The oil flow FL may be part of an oil based cooling circuit (see Fig. 9 in this context). In Fig. 1 the oil flow FL first passes the drive unit oil channel 6 and then the water oil plate heat exchanger 7a. However, it may also go through the water oil plate heat exchanger 7a first and then pass the drive unit oil channel 6.

Fig. 2 now shows a sectional view of an exemplary electric power converter 5a. The electric power converter 5a comprises a converter base body 21, a cooling plate 22 with cooling pins 23, electronic power switches 24, which for example may be embodied as field effect transistors or insulated-gate bipolar transistors, and an optional converter insulation 25, which in this case is continuous but may also comprise a hollow space enlcosing the electronic power switches 24 as the case may be. The water flow FW goes through the converter water channel WCH', which connects the converter water inlet WI2 and the converter water outlet WO2. The water flow FW also passes the cooling pins 23, which reach into the converter water channel WCH'. In this embodiment, the cooling pins 23 are part of the cooling plate 22, by which the converter water channel WCH' is closed. Waste heat generated by the electronic power switches 24 is transferred to the cooling plate 22 and from there to the cooling water of the water flow FW via the cooling pins 23. Instead of cooling pins 23 the cooling plate 22 may also comprise cooling fins for the same reason.

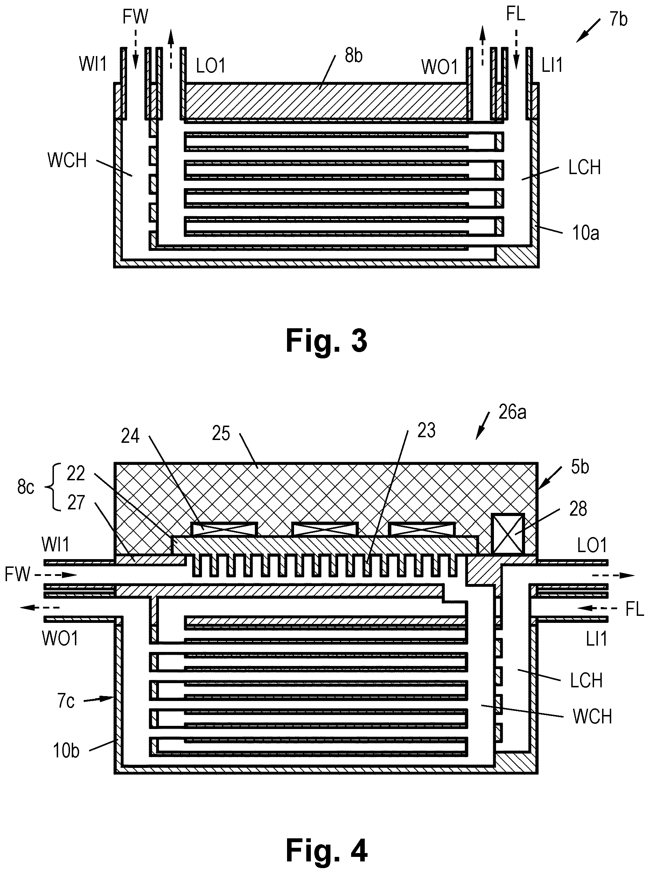

Moreover, Fig. 3 shows a detailed sectional view of an exemplary water oil plate heat exchanger 7b, which is similar to the water oil plate heat exchanger 7a of Fig. 1, and in detail shows the heat exchanger water channel WCH between the heat exchanger water inlet WI1 and the heat exchanger water outlet WO1 and the heat exchanger oil channel LCH between the heat exchanger oil inlet LI1 and the heat exchanger oil outlet LO1. In this embodiment, the heat exchanger water inlet WI1, the heat exchanger water outlet WO1, the heat exchanger oil inlet LI1 and the heat exchanger oil outlet LO1 are arranged in a base body 8b of the water oil plate heat exchanger 7b.

Generally, the water oil plate heat exchanger 7a, 7b comprises a plurality of heat exchanger plates 9 (not shown in detail in Fig. 3), which form a plate stack 10, 10a and which alternatingly and pairwise form sections of the heat exchanger water channel WCH and sections of the heat exchanger oil channel LCH in-between. In particular, the heat exchanger plates 9 can have the same height measured in a stacking direction. The base body 8a, 8b is mounted to the plate stack 10, 10a, is plate-like and is thicker than each of the heat exchanger plates 9.

In the embodiment of Fig. 1, the water oil plate heat exchanger 7a is mounted on the housing 2a of the electric drive unit 1a. In detail, the base body 8a and hence the water oil plate heat exchanger 7a is directly mounted on the housing 2a of the electric drive unit 1a. "Directly mounted" in this context in particular means "without the use of additional parts, except of optional sealings in-between". In other words, in the given example, there is body contact between the base body 8a and the housing 2a, as the case may be with an optional sealing in-between.

Moreover, the electric power converter 5a is directly mounted on the housing 2a of the electric drive unit 1a in this embodiment. Accordingly, there is body contact between the electric power converter 5a and the housing 2a of the electric drive unit 1a, as the case may be with an optional sealing in-between.

In addition, in this embodiment, the drive unit oil channel 6 is directly connected to the heat exchanger oil channel LCH via the heat exchanger oil inlet LI1. Similarly, the drive unit oil channel 6 can directly be connected to the heat exchanger oil channel LCH via the heat exchanger oil outlet LO1. "Directly connected" in this context in particular means "without the use of additional tubes". Instead, the connection between the drive unit oil channel 6 and the heat exchanger oil channel LCH in this case is provided by body contact of the housing 2a and the water oil plate heat exchanger 7a, as the case may be with an optional sealing in-between.

In the embodiment of Fig. 1, the water oil plate heat exchanger 7a is directly mounted on the housing 2a of the electric drive unit 1a. However, this is not the only possibility, and the water oil plate heat exchanger 7a may also be directly mounted on the electric power converter 5b, in particular with its base body 8c, like this is depicted in Fig. 4. Basically, Fig. 4 shows a converter heat exchanger arrangement 26a, which combines the features disclosed in Figs. 2 and 3. In detail, the converter heat exchanger arrangement 26a comprises a cooling plate 22 with cooling pins 23, electronic power switches 24, which for example again may be embodied as field effect transistors or insulated-gate bipolar transistors, an optional converter insulation 25 (which again may comprise a hollow space enclosing the electronic power switches 24), a connector body 27 and a control unit 28. In this embodiment, the base body 8c is multipart and comprises the connector body 27 and the cooling plate 22. The connector body 27 comprises the heat exchanger water inlet WI1, the heat exchanger water outlet WO1, the heat exchanger oil inlet LI1 and the heat exchanger oil outlet LO1. The cooling plate 22 closes the heat exchanger water channel WCH and carries the electronic power switches 24 of the electric power converter 5b and in this example additionally the control unit 28 of the electric power converter 5b. Fig. 4 moreover shows the heat exchanger water channel WCH between the heat exchanger water inlet WI1 and the heat exchanger water outlet WO1 and the heat exchanger oil channel LCH between the heat exchanger oil inlet LI1 and the heat exchanger oil outlet LO1. Again, sections of the heat exchanger water channel WCH and sections of the heat exchanger oil channel LCH are formed by the exchanger plates 9 (not shown in detail in Fig. 4), which form a plate stack 10b. Again, the heat exchanger plates 9 can have the same height measured in a stacking direction. The base body 8c again is mounted to the plate stack 10b, is plate-like and is thicker than each of the heat exchanger plates 9. In this example, the water flow FW first passes the cooling pins 23 and picks up waste heat generated by the electronic power switches 24 and the control unit 28 before it goes into the plate stack 10b where heat transfer from the oil of the oil flow FL to the water of the water flow FW takes place. So, the converter heat exchanger arrangement 26a is not only provided for heat exchange between oil and water, but also for cooling the electric power converter 5b. In the embodiment of Fig. 4, the water flow FW first passes the cooling pins 23 and then the plate stack 10b. However, the water flow FW may also first pass the plate stack 10b and then the cooling pins 23 in an alternative embodiment. Instead of cooling pins 23 the cooling plate 22 may also comprise cooling fins for cooling the electronic power switches 24 and the control unit 28.

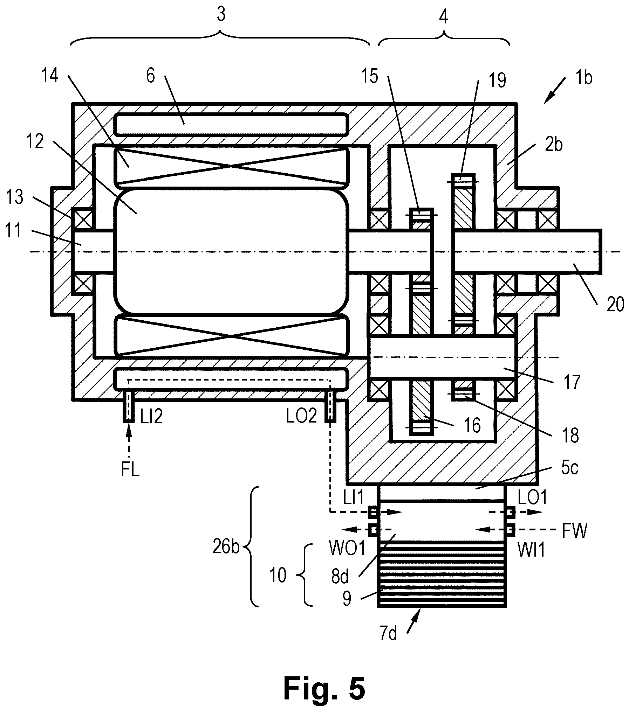

Fig. 5 shows an embodiment of an electric drive unit 1b, which is similar to the electric drive unit 1a depicted in Fig. 1. In contrast, a water oil plate heat exchanger 7d, is put on top of an electric power converter 5c and together with the electric power converter 5c forms a converter heat exchanger arrangement 26b. The converter heat exchanger arrangement 26b of Fig. 5 is similar to the converter heat exchanger arrangement 26a shown in Fig. 4. However, the heat exchanger water inlet WI1, the heat exchanger water outlet WO1, the heat exchanger oil inlet LI1 and the heat exchanger oil outlet LO1 are arranged differently. Nonetheless, the function of the converter heat exchanger arrangement 26b is similar or even the same as the function of the converter heat exchanger arrangement 26a, and the converter heat exchanger arrangement 26b is not only provided for heat exchange between oil of the oil flow FW and water of the water flow FW, but also for cooling the electric power converter 5c.

In this embodiment, the water oil plate heat exchanger 7d with its base body 8d is (directly) mounted on the electric power converter 5c. Accordingly, there may be body contact between the electric power converter 5c and the water oil plate heat exchanger 7d (here with its base body 8d), as the case may be with an optional sealing in-between.

Like in Fig. 1, the oil flow FL first passes the drive unit oil channel 6 and then the water oil plate heat exchanger 7d. In detail, it enters the drive unit oil channel 6 through its oil inlet LI2 and leaves it through its oil outlet LO2. Then it enters the water oil plate heat exchanger 7d through its heat exchanger oil inlet LI1 and leaves the same through its heat exchanger oil outlet LO1. For example, the oil outlet LO2 of the drive unit oil channel 6 can be connected to the oil inlet LI2 of the water oil plate heat exchanger 7d by means of a tube for this reason. Further on, the oil flow FL may be part of an oil based cooling circuit (see Fig. 9 in this context). In Fig. 5, the oil flow FL first passes the drive unit oil channel 6 and then the water oil plate heat exchanger 7d. However, it may also go through the water oil plate heat exchanger 7d first and then pass the drive unit oil channel 6.

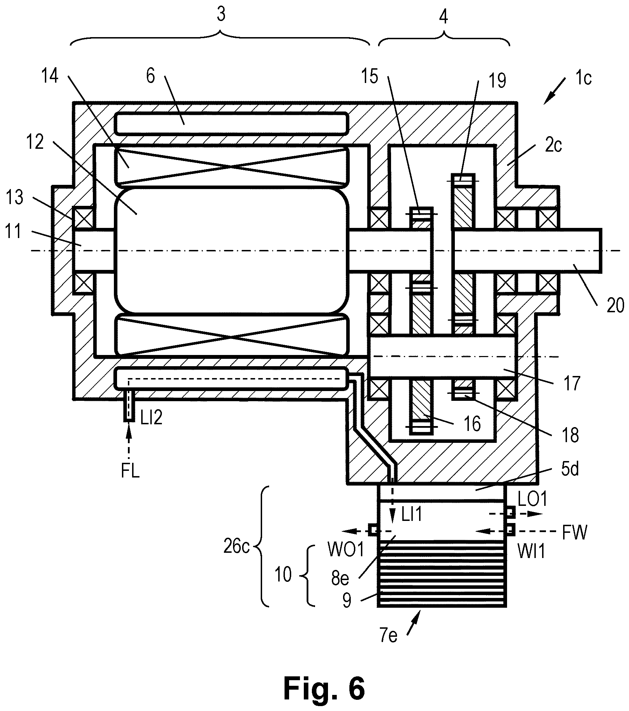

Fig. 6 shows an embodiment of an electric drive unit 1c, which is very similar to the electric drive unit 1b depicted in Fig. 5. In contrast, the drive unit oil channel 6 is directly connected to a converter oil channel in the electric power converter 5d, wherein the converter oil channel is directly connected to the heat exchanger oil channel LCH via the heat exchanger oil inlet LI1 or oil heat exchanger outlet LO1.

"Directly connected" in the given context in particular means "without the use of additional tubes". Instead, a smaller portion of the drive unit oil channel 6 leads from the electric motor 3 to the electric power converter 5d. Moreover, for the connections between the drive unit oil channel 6 and the converter oil channel and the converter oil channel and the heat exchanger oil channel LCH, body contact of the respective parts is provided, again with optional sealings in-between as the case may be. The converter oil channel for example may be embodied as a simple hole in the electric power converter 5d , which connects the drive unit oil channel 6 and the heat exchanger oil channel LCH.

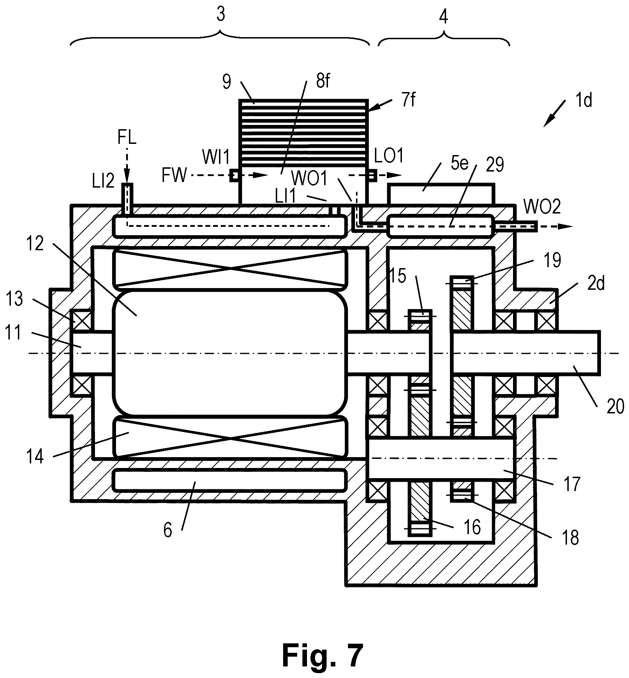

Fig. 7 shows a sectional view of another example of an electric drive unit 1d, which is similar to the electric drive unit 1a of Fig. 1. In contrast, a drive unit water channel 29 is arranged in the housing 2d of the electric drive unit 1d adjacent to the power converter 5e for cooling the same. In this embodiment, the drive unit water channel 29 is directly connected to the heat exchanger water channel WCH via the heat exchanger water outlet WO1. However, alternatively, the drive unit water channel 29 may also be connected to the heat exchanger water inlet WI1 when the direction of the water flow FW is reversed. In line with the aforementioned definitions, "directly connected" in the given context in particular again means "without the use of additional tubes". Instead, the connection between the drive unit water channel 29 and the heat exchanger water channel WCH is provided by body contact of the housing 2d and the water oil plate heat exchanger 7f, as the case may be with an optional sealing in-between.

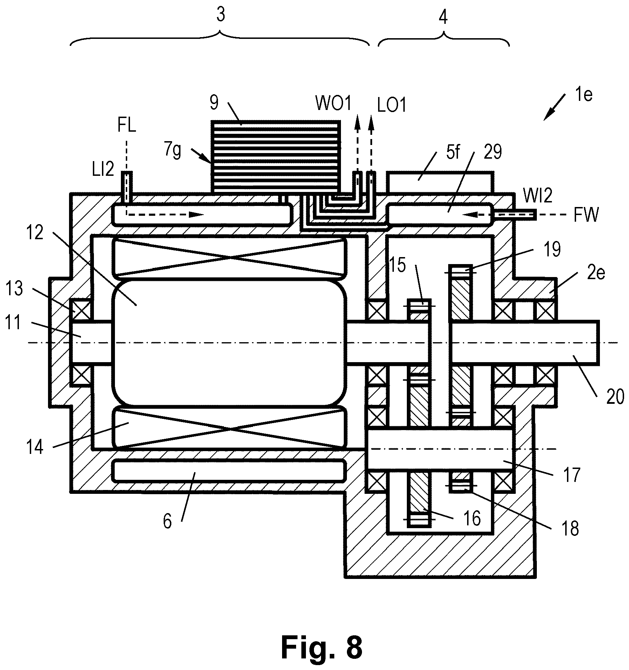

In the above embodiment, the drive unit water channel 29 is directly connected to the heat exchanger water channel WCH. In case that the water oil plate heat exchanger 7f is arranged on top of the electric power converter 5e like this is the case in the embodiment of Figs. 5 and 6, it is also possible to directly connect the drive unit water channel 29 to the converter water channel WCH' in the electric power converter 5e, wherein the converter water channel WCH' additionally is directly connected to the heat exchanger water channel WCH via the heat exchanger water inlet WI1 or heat exchanger water outlet WO1. The converter water channel WCH' for example may be embodied as a simple hole in the electric power converter 5e, which connects the drive unit water channel 29 and the heat exchanger water channel WCH. The connections between the drive unit water channel 29 and the converter water channel WCH' and between the converter water channel WCH' and the heat exchanger water channel WCH are provided by body contact of the respective parts, again with optional sealings in-between as the case may be. The converter water channel WCH' may also comprise optional cooling fins or cooling pins 23 and may be provided for cooling the electric power converter 5e. Fig. 8 shows a sectional view of yet another example of an electric drive unit 1e, which is similar to the electric drive unit 1d of Fig. 7. In contrast, the plate stack formed by the heat exchanger plates 9 is directly mounted on the housing 2e of the electric drive unit 1e. So, there is no base body 8a..8f. Instead, connections between the water oil plate heat exchanger 7g and the drive unit oil channel 6 and between the water oil plate heat exchanger 7g and the drive unit water channel 29 are made internally within the housing 2e of the electric drive unit 1e. "Directly mounted" in the given context again in particular means "without the use of additional parts, except of optional sealings in-between". In other words, there is body contact between the plate stack and the housing 2e of the electric drive unit 1e, as the case may be with an optional sealing in-between.

In the above embodiment, the plate stack formed by the heat exchanger plates 9 is directly mounted on the housing 2e of the electric drive unit 1e. In case that the water oil plate heat exchanger 7g is arranged on top of the electric power converter 5f like this is the case in the embodiment of Figs. 5 and 6, it is also possible to directly mount the plate stack on the electric power converter 5f. In this case, there is body contact between the plate stack and the electric power converter 5f, as the case may be with an optional sealing in-between.

Generally, in all embodiments, the water oil plate heat exchanger 7a..7g can be bolted, welded or glued to the housing 2a..2e of the electric drive unit 1a..1e or can be bolted, welded or glued to the electric power converter 5a..5f respectively.

If the base body 8a..8f is directly mounted on the housing 2a..2e of the electric drive unit 1a..1e or is directly mounted on the electric power converter 5a..5f respectively, the base body 8a..8f can be made very thin because stability of the water oil plate heat exchanger 7a..7g is given by the housing 2a..2e or by the electric power converter 5a..5f respectively. In particular, the plate-like base body 8a..8f can have a height measured in a stacking direction of < 3 mm then.

In the embodiments of Figs. 1 and 8, the water oil plate heat exchanger 7a, 7g is mounted on the housing 2a, 2e of the electric drive unit 1a, 1e. However, the water oil plate heat exchanger 7a, 7g may also be seen as integral part of the housing 2a, 2e, or parts or functions of the same may be implemented in the housing 2a, 2e. For example, the function of the base body 8a may be implemented in the housing 2a like this is the case in Fig. 8. So, the water oil plate heat exchanger 7a..7g, at least in parts, can also be integrated in the housing 2a..2e of the electric drive unit 1a..1e.

Fig. 9 finally shows an electric vehicle 30, which comprises an electric drive unit ("e-axle") 1 with an electric motor 3, a gear unit 4, an electric power converter 5 and a water oil plate heat exchanger 7 as outlined above. The electric drive unit 1 is mechanically coupled to wheels 32 of the electric vehicle 30 by means of side shafts 31. The electric motor 3 may be provided for powering the electric vehicle 30 permanently in a pure electric car or intermittently, e.g. in combination with a combustion engine in a hybrid car. Moreover, the electric vehicle 30 comprises an oil pump 33, a water pump 34 and a cooler 35. The water pump 34 generates the water flow FW, which transports waste heat from the electric power converter 5 and the water oil plate heat exchanger 7 to the cooler 35 where it is transferred to the environment. The oil pump 33 generates the oil flow FW, which transports waste heat from the electric motor 3 to the water oil plate heat exchanger 7 where it is transferred to the water flow FW.

It is noted that the invention is not limited to the embodiments disclosed hereinbefore, but combinations of the different variants are possible. In reality, the gearbox 1, 1a..1e and the electric vehicle 30 may have more or less parts than shown in the figures. In Moreover, the description may comprise subject matter of further independent inventions.

It should also be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

### List of Reference Numerals

- 1, 1a..1e: electric drive unit
- 2a..2e: housing
- 3: electric motor
- 4: gear unit
- 5, 5a..5f: electric power converter
- 6: drive unit oil channel
- 7, 7a..7g: water oil heat plate exchanger
- 8a..8f: base body
- 9: heat exchanger plate
- 10, 10a, 10b: plate body / plate stack
- 11: rotor shaft
- 12: rotor
- 13: bearing
- 14: stator
- 15: pinion
- 16: gear wheel
- 17: intermediate shaft
- 18: pinion
- 19: gear wheel
- 20: output shaft
- 21: converter base body
- 22: cooling plate
- 23: cooling pin
- 24: electronic power switches
- 25: converter insulation
- 26a..26c: converter heat exchanger arrangement
- 27: connector body
- 28: control unit
- 29: drive unit water channel
- 30: electric vehicle
- 31: axle
- 32: wheel
- 33: oil pump
- 34: water pump
- 35: cooler
- WI1: heat exchanger water inlet
- WI2: converter water inlet
- WO1: heat exchanger water outlet
- WO2: converter water outlet
- WCH: heat exchanger water channel
- WCH': converter water channel
- LI1: heat exchanger oil inlet
- LO1: heat exchanger oil outlet
- LCH: heat exchanger oil channel
- FL: oil flow
- FW: water flow
- LI2: drive unit oil channel inlet
- LO2: drive unit oil channel outlet

## Claims

1. Electric drive unit (1, 1a..1e), comprising
- a housing (2a..2e),
- an electric motor (3) arranged in the housing (2a..2e),
- a gear unit (4), which is arranged in the housing (2a..2e) and mechanically coupled to the electric motor (3),
- an electric power converter (5, 5a..5f), which is arranged on or in the housing (2a..2e) and which is electrically connected to the electric motor (3) and
- a drive unit oil channel (6) arranged in the housing (2a..2e) at least in the region of the electric motor (3) for cooling the same,
**characterized in**
- a water oil plate heat exchanger (7, 7a..7g) with a heat exchanger water inlet (WI1), a heat exchanger water outlet (WO1), a heat exchanger water channel (WCH) between the heat exchanger water inlet (WI1) and the heat exchanger water outlet (WO1), a heat exchanger oil inlet (LI1), a heat exchanger oil outlet (LO1) and a heat exchanger oil channel (LCH) between the heat exchanger oil inlet (LI1) and the heat exchanger oil outlet (LO1), wherein the water oil plate heat exchanger (7, 7a..7g)
a) is mounted on or integrated in the housing (2a..2e) of the electric drive unit (1, 1a..1e) or
b) is mounted on the electric power converter (5, 5a..5f).

2. Electric drive unit (1, 1a..1e) as claimed in claim 1, **characterized in that** the water oil plate heat exchanger (7, 7a..7g)
in case a) is directly mounted on or integrated in the housing (2a..2e) of the electric drive unit (1, 1a..1e) or
in case b) is directly mounted on the electric power converter (5, 5a..5f).

3. Electric drive unit (1, 1a..1e) as claimed in claim 2, **characterized in that** the drive unit oil channel (6)
in case a) is directly connected to the heat exchanger oil channel (LCH) via the heat exchanger oil inlet (LI1) or heat exchanger oil outlet (LO1) or
in case b) is directly connected to a converter oil channel in the electric power converter (5, 5a..5f), wherein the converter oil channel is directly connected to the heat exchanger oil channel (LCH) via the heat exchanger oil inlet (LI1) or oil heat exchanger outlet (LO1).

4. Electric drive unit (1, 1a..1e) as claimed in claim 2 or 3, **characterized in** a drive unit water channel (29), which is arranged in the housing (2a..2e) of the electric drive unit (1, 1a..1e) adjacent to the power converter (5, 5a..5f) for cooling the same, wherein the drive unit water channel (29)
in case a) is directly connected to the heat exchanger water channel (WCH) via the heat exchanger water inlet (WI1) or heat exchanger water outlet (WO1) or
in case b) is directly connected to a converter water channel (WCH') in the electric power converter (5), wherein the converter water channel (WCH') is directly connected to the heat exchanger water channel (WCH) via the heat exchanger water inlet (WI1) or heat exchanger water outlet (WO1).

5. Electric drive unit (1, 1a..1e) as claimed in any one of claims 1 to 4, **characterized in that** the water oil plate heat exchanger (7, 7a..7g) comprises a plate stack (10, 10a, 10b) of a plurality of heat exchanger plates (9), which alternatingly and pairwise form sections of the heat exchanger water channel (WCH) and sections of the heat exchanger oil channel (LCH) in-between.

6. Electric drive unit (1, 1a..1e) as claimed in claim 5, **characterized in that** the heat exchanger plates (9) have the same height measured in a stacking direction.

7. Electric drive unit (1, 1a..1e) as claimed in claim 5 or 6, **characterized in that** the water oil plate heat exchanger (7, 7a..7g) comprises a base body (8a..8f) with the heat exchanger water inlet (WI1), the heat exchanger water outlet (WO1), the heat exchanger oil inlet (LI1) and the heat exchanger oil outlet (LO1), wherein the base body (8a..8f)
- is mounted to the plate stack (10, 10a, 10b) of heat exchanger plates (9),
- is plate-like and
- is thicker than each of the heat exchanger plates (9).

8. Electric drive unit (1, 1a..1e) as claimed in claim 7, **characterized in that** the base body (8a..8f)
in case a) is directly mounted on or integrated in the housing (2a..2e) of the electric drive unit (1, 1a..1e) or
in case b) is directly mounted on the electric power converter (5, 5a..5f).

9. Electric drive unit (1, 1a..1e) as claimed in claim 7 or 8, **characterized in that** the plate-like base body (8a..8f) has a height measured in a stacking direction of < 3mm.

10. Electric drive unit (1, 1a..1e) as claimed in any one of claims 7 to 9, **characterized in that** base body (8a..8f) in case b) is multipart and comprises a connector body (27) with the heat exchanger water inlet (WI1), the heat exchanger water outlet (WO1), the heat exchanger oil inlet (LI1) and the heat exchanger oil outlet (LO1) and comprises a cooling plate (22), which at least electronic power switches (24) of the electric power converter (5, 5a..5f) are mounted on and which closes the heat exchanger water channel (WCH).

11. Electric drive unit (1, 1a..1e) as claimed in claim 5 or 6, **characterized in that** the plate stack (10, 10a, 10b) of heat exchanger plates (9)
in case a) is directly mounted on or integrated in the housing (2a..2e) of the electric drive unit (1, 1a..1e) or
in case b) is directly mounted on the electric power converter (5, 5a..5f).

12. Electric drive unit (1, 1a..1e) as claimed in any one of claims 1 to 11, **characterized in that** water oil plate heat exchanger (7, 7a..7g)
in case a) is bolted, welded or glued to the housing (2a..2e) of the electric drive unit (1, 1a..1e) or
in case b) is bolted, welded or glued to the electric power converter (5, 5a..5f).

13. Vehicle (30), **characterized in** an electric drive unit (1, 1a..1e) as claimed in any one of claims 1 to 12, which is provided to propel the vehicle (30) at least partially or intermittently.
